# EUROPÄISCHE PATENTANMELDUNG

(11) **EP 3 556 528 A1**
(43) Veröffentlichungstag der Anmeldung: **23.10.2019**
(21) Anmeldenummer: 19169384.5
(22) Anmeldetag: 16.04.2019
(51) Int. Cl.: B29C 44/58, B29C 33/30

(54) **WERKZEUG UND VORRICHTUNG ZUR HERSTELLUNG VON GESCHÄUMTEN DÄMMPLATTEN**

(30) Priorität: 18.04.2018 DE 202018102138 U
(71) Anmelder: Kurtz GmbH, 97892 Kreuzwertheim (DE)
(72) Erfinder: Behringer, Jürgen, 97906 Kühlsheim (DE); Lehmann, Peter, 97906 Faulbach (DE)
(74) Vertreter: HGF Europe LLP

(57) **Zusammenfassung**

Die Erfindung betrifft ein Werkzeug und ein Verfahren zur Herstellung von geschäumten Dämmplatten, insbesondere von Fassadendämmplatten zur Gebäudeisolierung, wobei die Dämmplatten zwei einander gegenüberliegende Seitenflächen und umlaufende Stirnflächen aufweisen. Das Werkzeug weist zwei Formhälften (1) mit jeweils einem Formrahmen (2) und einem Formboden (3) auf, so dass die beiden Formhälften gemeinsam ein Formnest begrenzen, das in etwa einer herzustellenden Dämmplatte entspricht, wobei die Formrahmen die Stirnflächen einer herzustellenden Dämmplatte und die Formböden die Seitenflächen einer herzustellenden Dämmplatte definieren. Es ist eine Einstelleinrichtung zum Einstellen der Position der beiden Formhälften (1) in einer Ebene parallel zu den Formböden (3) vorgesehen.

## Beschreibung

Die vorliegende Erfindung betrifft ein Werkzeug und eine Vorrichtung zur Herstellung von geschäumten Dämmplatten, insbesondere von Fassadendämmplatten zur Gebäudeisolierung.

Geschäumte Fassadendämmplatten zur Gebäudeisolierung werden oftmals aus Schaumstoffpartikeln hergestellt, welche einem durch ein Formwerkzeug begrenztem Formnest zugeführt werden. Die Schaumstoffpartikel werden im Formnest durch Zuführen von Dampf verschweißt bzw. versintert.

Entsprechende Werkzeuge und Vorrichtungen sind beispielsweise aus der DE 20 2004 003 679 U1, der EP 2 610 043 A1 und der EP 2 610 048 A1 bekannt. Die hierbei verwendeten Werkzeuge weisen jeweils zwei Formhälften auf, wobei zumindest eine der Formhälften aus einem Formrahmen und einem Formboden ausgebildet ist. Der Formboden ist innerhalb des Formraumes verschieblich angeordnet, so dass mit einem Werkzeug Platten unterschiedlicher Dicke herstellbar sind. Sind zwei Formhälften vorgesehen, dann begrenzen beide Formhälften jeweils einen Teil des Formnestes und bilden einen plattenförmigen, quaderförmigen Hohlraum. Vorzugsweise sind die Formhälften mit ihren Hohlräumen ein Stück zueinander versetzt angeordnet, so dass sich an der herzustellenden Dämmplatte eine Stufe an den Stirnflächen der Dämmplatte bildet. Die Stufe wird auch als Stufenfalz bezeichnet und dient dazu, dass bei der Isolation eines Gebäudes benachbarte Dämmplatten mit den jeweiligen Stufenfalzen zueinander überlappend angeordnet werden können, so dass es keinen geradlinigen Durchgang durch die Fugen zwischen zwei benachbarten Dämmplatten gibt. Mit diesen Stufenfalzen wird somit eine Art Labyrinthdichtung zwischen den benachbarten Dämmplatten ausgebildet. Diese Falze haben somit für die Funktion der Dämmplatten eine erhebliche Bedeutung. Vorzugsweise sind an zwei benachbarten Stirnflächen einer Dämmplatte vorstehende Stufenfalze und an den beiden anderen benachbarten Stirnflächen entsprechend rückspringende Stufenfalze ausgebildet. Hierdurch ist es möglich, eine beliebige Anzahl von Dämmplatten bündig mit überlappenden Stufenfalzen aneinander anzuordnen.

Mit den oben angegebenen Werkzeugen und Vorrichtungen können derartige mit Stufenfalz versehene Dämmplatten aus Schaumstoffpartikel hergestellt werden.

Die Anmelderin hat für interne Zwecke Werkzeuge hergestellt, bei welchen die Formhälften in unterschiedlichen Positionen zueinander positionierbar sind, um mittels Zentrierstifte, welche in entsprechenden Löchern einer Lochreihe eingreifen, in ihrer Position fixiert zu werden. Hierbei können jedoch nur vorbestimmte Position eingenommen werden, die durch den Abstand der Löcher in der Lochreihe festgelegt sind.

Je nach Dicke der geschäumten Platten und verwendetem Kunststoffmaterial wären unterschiedlich große Stufenfalze von Vorteil.

Aus der DE 92 18 348 geht eine Vorrichtung zur Herstellung von Partikelschaumstoffteilen hervor, mit welcher in einem Formwerkzeug zunächst ein erstes Partikelschaumstoffteil hergestellt wird. Dieses Partikelschaumstoffteil wird dann mittels Haltegliedern örtlich fixiert. Die Wandungen des Werkzeuges werden auseinandergefahren, so dass sich um das erste Partikelschaumstoffteil ein Hohlraum ergibt. Die Halteglieder halten das Partikelschaumstoffteil etwa zentrisch im Hohlraum. Hierzu weisen die Halteglieder Stifte auf, welche in das Partikelschaumstoffteil gedrückt sind. Des Weiteren sind Positionierstempel vorgesehen, welche an der Außenfläche des Partikelschaumstoffteils anliegen, um das Partikelschaumstoffteil im Formnest zu positionieren. Ist das Partikelschaumstoffteil korrekt positioniert, dann werden die Positionierstempel eingezogen und das Partikelschaumstoffteil alleine mittels der Stifte gehalten. In dem das Partikelschaumstoffteil umgebenden Hohlraum werden weitere Schaumstoffpartikel zugeführt, welche aus einem anderen Material als die Schaumstoffpartikel des ersten Partikelschaumstoffteils bestehen. Diese Schaumstoffpartikel werden unter Zuführung von Dampf verschweißt und verbinden sich mit dem ersten Partikelschaumstoffteil, das einen Kern des endgültigen Produktes bildet. Diese Vorrichtung erlaubt somit die Herstellung von Schaumstoffpartikeln mit einem inneren Kern, welcher aus einem ersten Kunststoffmaterial ausgebildet ist, und einer äußeren Umhüllung, welche aus einem zweiten Kunststoffmaterial ausgebildet ist.

Aus der DE 19808421 C1 geht eine Form zur Herstellung von quaderförmigen Blöcken variabler Breite aus schäumbarem Polystyrol hervor. Eine Seitenwand dieser Form ist verfahrbar ausgebildet, sodass sich quaderförmige Blöcke unterschiedlicher Breite herstellen lassen.

In der DE 2152248 C ist eine Blockform zur Herstellung von Blöcken mit variablem Querschnitt aus schäumbarem Polystyrol beschrieben. Die Form ist zur Herstellung kreiszylindrischer Blöcke ausgebildet. Eine der Stirnwandungen der Form ist verschieblich. Hierdurch können kreiszylindrische Blöcke mit unterschiedlicher Höhe hergestellt werden.

Aus der CH 668033 A5 geht eine Vorrichtung zur Herstellung eines Formkörpers aus mindestens zwei Polystyrolschaumstoffen unterschiedlicher Dichte hervor. Die Vorrichtung weist einen Formkasten auf, in dem zunächst ein erster Formabschnitt geformt werden kann. Dann werden Formwandungen des Formkastens zurückgezogen, sodass Platz für einen zweiten Formabschnitt besteht.

Der Erfindung liegt daher die Aufgabe zugrunde, ein Werkzeug, eine Vorrichtung und ein Verfahren zur Herstellung von geschäumten Dämmplatten, insbesondere von Fassadendämmplatten zur Gebäudeisolierung, zu schaffen, mit welchen die Fassadendämmplatten mit unterschiedlich großen, veränderbaren Stufenfalze herstellbar sind.

Die Aufgabe wird durch die Gegenstände der unabhängigen Ansprüche gelöst. Vorteilhafte Ausgestaltungen der Erfindung sind in den jeweiligen Unteransprüchen angegeben.

Ein Werkzeug zur Herstellung von geschäumten Dämmplatten, insbesondere von Fassadendämmplatten für die Gebäudeisolierung, wobei die Dämmplatten zwei einander gegenüberliegende Seitenflächen und umlaufende Stirnflächen aufweisen, weist zwei Formhälften mit jeweils einem Formrahmen und einem Formboden auf. Die beiden Formhälften begrenzen gemeinsam ein Formnest, das in etwa einer herzustellenden Dämmplatte entspricht. Die Formrahmen definieren bzw. begrenzen die Stirnflächen einer herzustellenden Dämmplatte und die Formböden die Seitenflächen. Es ist eine Einstelleinrichtung zum Einstellen der Position der beiden Formhälften in einer Ebene parallel zu den Formböden vorgesehen.

Hierdurch lassen sich Fassadendämmplatten zur Gebäudeisolierung mit veränderbarem Stufenfalz herstellen. Hierdurch können Fassadendämmplatten je nach Bedarf, beispielsweise entsprechend der Dicke und des entsprechenden Materials und angepassten Stufenfalz hergestellt werden.

Das Formnest des Werkzeuges entspricht "in etwa" einer herzustellenden Dämmplatte, da sich die Dämmplatte nach dem Verschweißen der Schaumstoffpartikel im Formnest etwas zusammenzieht und damit von der Form des Formnestes etwas abweicht.

Diese Einstelleinrichtung kann zum stufenlosen Einstellen der Position der beiden Formhälften zueinander ausgebildet sein. Hierdurch kann die Größe des Falzes beliebig eingestellt werden.

Üblicherweise besitzen die Formrahmen die Form eines Rechtecks. Die Einstelleinrichtung kann zum Einstellen der Position der beiden Formhälften in ein gegenüber einer Kante des Rechtecks geneigten Richtung ausgebildet sein. Diese Richtung wird im Folgenden auch als Verstellrichtung bzw. Diagonalrichtung bezeichnet. Diese Verstellrichtung kann um 45° oder auch um einen anderen Winkel, insbesondere im Bereich von 20° bis 70° gegenüber einer Kante des Rechtecks geneigt sein.

Das Einstellen der Position der beiden Formhälften in Diagonalrichtung ist dann zweckmäßig, wenn lediglich eine Formhälfte bewegt wird und die andere Formhälfte diesbezüglich ortsfest angeordnet ist. Es kann jedoch auch zweckmäßig sein, dass beide Formhälften in einer Ebene parallel zu den Formböden bewegt werden, wobei die Bewegungsrichtung der beiden Formhälften dann vorzugsweise mit zwei zueinander orthogonalen Richtungen ausgerichtet sind. Insbesondere sind die Bewegungsrichtungen senkrecht bzw. parallel zu einer Kante des Rechtecks des Formrahmens ausgerichtet. Mit zwei zueinander orthogonalen Bewegungsrichtungen können Stufenfalze unterschiedlicher Größe an den Stirnflächen der Dämmplatte eingestellt werden.

Durch Verstellen in Diagonalrichtung werden Dämmplatten mit zwei vorstehenden Stufenfalzen und zwei benachbarten Stirnflächen und zwei rückspringenden Stufenfalzen an den beiden anderen Stirnflächen ausgeformt.

Die Formhälften weisen vorzugsweise jeweils einen Pressrahmen auf, der mit einer Presse verbindbar ist. An einem der beiden Pressrahmen ist ein Verstellrahmen angeordnet, an dem einer der Formrahmen und einer der Formböden befestigt sind. Der Verstellrahmen ist am Pressrahmen verschieblich gelagert und ein Aktuator ist zum stufenlosen Verschieben des Verstellrahmens gegenüber dem Pressrahmen vorgesehen.

Der Pressrahmen ist ein sehr steifer Rahmen, der die Kräfte der Presse über den gesamten Umfang des Werkzeuges verteilt übertragen kann. Der Verstellrahmen kann rahmenförmig oder auch als ein Art Fachwerkgerüst ausgebildet sein, das den Formrahmen und den Formboden hält.

Der Aktuator kann eine elektrische, hydraulische oder pneumatische Antriebseinrichtung aufweisen. Eine solche Antriebseinrichtung erlaubt es, den Versatz der beiden Formhälften mittels einer Steuereinrichtung zu verstellen. Der Versatz kann beispielsweise ferngesteuert oder in Abhängigkeit eines bestimmten Verarbeitungsprogrammes automatisch eingestellt werden.

Grundsätzlich ist es jedoch auch möglich, einen Aktuator vorzusehen, der manuell betätigt werden kann.

Eine Antriebseinrichtung ist vorzugsweise mit dem Aktuator mittels eines Getriebes und nicht mit einer Kette gekoppelt. Eine Kette hat den Nachteil, dass sie regelmäßig geölt werden muss und dies zu Verunreinigungen führen kann.

Am Pressrahmen sind vorzugsweise mehrere Klauen zum Fixieren des Verstellrahmens vorgesehen. Die Klauen können hydraulisch, pneumatisch oder elektrisch betätigbar sein. Die Klauen greifen vorzugsweise am Umfang des Verstellrahmens an. Der Verstellrahmen kann hierzu Kanten aufweisen, welche sich parallel zur Verstellrichtung erstrecken, so dass die Ineingriffnahme mit ortsfesten Klauen unabhängig von der jeweiligen Position des Verstellrahmens zum Pressrahmen sichergestellt ist.

Zwischen dem Verstellrahmen und dem korrespondierenden Pressrahmen kann ein Gleitlager ausgebildet sein.

Das Gleitlager dient insbesondere zum Lagern zweier Kontaktflächen des Verstellrahmens und des Pressrahmens, welche in etwa parallel zu den Formböden angeordnet sind. Das Gleitlager kann aus einer Gleitplatte und/oder einem Kugellager ausgebildet sein. Insbesondere kann am Pressrahmen oder am Verstellrahmen eine glatte, harte Platte, beispielsweise aus VA-Stahl, vorgesehen sein und am entsprechend anderen Rahmen ein Kugelbolzen mit einer auf der glatten Platte abrollenden Kugel.

In einer Vorrichtung zur Herstellung von geschäumten Dämmplatten sind die Werkzeuge oftmals vertikal angeordnet. Deshalb kann es zweckmäßig sein, dass am Pressrahmen zumindest ein Lastlager vorgesehen ist, welches bei vertikaler Anordnung an einer unteren Stirnfläche des Verstellrahmens anliegt, wobei der Verstellrahmen angrenzend zu dem Lastlager eine nach unten offene muldenförmige Ausnehmung aufweist, so dass das Lastlager in eine Nullstellung an einem Scheitelpunkt dieser Ausnehmung anliegt. Hierdurch wird der Verstellrahmen allein durch die Schwerkraft eindeutig bezüglich des Pressrahmens positioniert und gehalten, wenn er nicht durch den Aktuator so beaufschlagt wird, dass er eine andere Position einnimmt.

Vorzugsweise sind zwei Lastlager am Pressrahmen angeordnet.

Zumindest eine der beiden Formhälften kann mit einer Tiefeneinstelleinrichtung ausgebildet sein, mit welcher der Formboden bezüglich des entsprechenden Formrahmens in einer zur Ebene des Formbodens etwa senkrecht stehenden Richtung verschiebbar ist. Hierdurch kann die Tiefe der entsprechenden Formhälfte verändert werden.

Vorzugsweise weist die Tiefeneinstelleinrichtung eine Antriebseinrichtung auf, welche von einer Steuereinrichtung angesteuert werden kann.

Ist sowohl die Tiefeneinstelleinrichtung als auch die Einstelleinrichtung zum Einstellen der Position der beiden Formhälften mit einer Antriebseinrichtung ausgebildet und sind sie jeweils von einer Steuereinrichtung ansteuerbar, dann kann das Formwerkzeug zur Ausbildung unterschiedlich dicker Dämmplatten mit unterschiedlichen Falzstufen automatisch von der Steuereinrichtung eingestellt werden. Dies ist insbesondere vorteilhaft, wenn beide Formhälften eine solche Tiefeneinstelleinrichtung aufweisen. Dann sind die hiermit herstellbaren Dämmplatten mit beliebigen Dicken ober- bzw. unterhalb der jeweiligen Falzstufe und mit beliebig großen Falzstufen herstellbar.

Die Tiefeneinstelleinrichtungen sind vorzugsweise auch so ausgebildet, dass sie die Formböden stufenlos bezüglich der Formrahmen und damit die Tiefe der jeweiligen Formhälfte stufenlos einstellen können.

Mit einem solchen Werkzeug können die Dämmplatten kundenspezifisch in ihrer Dicke und ihrem Stufenfalz verstellt werden, wobei die entsprechenden Parameter (Dicken ober- und unterhalb der Stufenfalzes und Größe des Stufenfalzes), welche vom Kunden vorgegeben werden, lediglich an die Steuereinrichtung zu übermitteln sind, die dann selbsttätig das Werkzeug entsprechend einstellt.

Eine Vorrichtung zur Herstellung von geschäumten Dämmplatten weist ein oben erläutertes Werkzeug auf und eine Presse, mit welcher die beiden Formhälften zusammengedrückt werden können. Im zusammengedrückten Zustand bilden sie das Formnest aus, in dem die herzustellende Dämmplatte durch Zuführen von Schaumstoffpartikel und Verschmelzen dieser Schaumstoffpartikel ausgebildet wird.

Diese Vorrichtung weist vorzugsweise eine Heizeinrichtung zum Erhitzen des Formnestes auf, so dass die Schaumstoffpartikel im Formnest miteinander verschweißt werden können. Die Heizeinrichtung kann ein Dampfgenerator zum Erzeugen von Dampf sein. Die Heizeinrichtung kann auch ein Generator zum Erzeugen von elektromagnetischen Wellen sein. Die elektromagnetischen Wellen sind vorzugsweise Radiowellen. Es können grundsätzlich jedoch auch Mikrowellen verwendet werden, welche jedoch aufgrund ihrer kurzen Wellenlänge nachteilig sind, da es schwierig ist, eine homogene gleichmäßige Erhitzung der Schaumstoffpartikel innerhalb des Formnestes mit Mikrowellen zu erzielen.

Bei einem Generator zum Erzeugen von elektromagnetischen Wellen ist das Formwerkzeug aus einem Material ausgebildet, das für die elektromagnetischen Wellen im Wesentlichen transparent ist. Metallplatten und Metallgerüste können hierfür ungeeignet sein, da sie den Eintritt der elektromagnetischen Wellen in das Formnest behindern können. Allerdings können die Formböden als Kondensatorplatten zum Anlegen der elektromagnetischen Wellen verwendet werden. Dann können elektrisch leitende Formböden aus Metall vorgesehen sein. Diese sind dann jedoch gegenüber der übrigen Vorrichtung elektrisch zu isolieren. Vorzugsweise sind sie mit einer für elektromagnetische Wellen transparenten oder semitransparenten Beschichtung an der Innenfläche zum Formnest ausgebildet. Eine solche semitransparente Beschichtung weist vorzugsweise ähnliche dielektrische Verlusteigenschaften wie die darin zu verschweißenden Schaumstoffpartikel auf, so dass sich die innere Begrenzungsfläche des Formwerkzeuges in ähnlicher Wiese wie die Schaumstoffpartikel erhitzen. Wird hingegen als Heizeinrichtung ein Dampfgenerator vorgesehen, dann sind an den Formhälften, insbesondere den Formböden, Dampfzuführungen vorzusehen. Die Dampfzuführungen sind Dampfdüsen. Die Dampfdüsen können separat an Dampfleitungen gekoppelt sein. Es kann jedoch auch außenseitig bezüglich des Formnestes an den Formhälften eine Dampfkammer ausgebildet sein, welche alle Dampfzuführungen mit Dampf versorgt.

Die Erfindung wird nachfolgend anhand der Zeichnungen beispielhaft näher erläutert. In den Zeichnungen zeigen:
- Figur 1: einen Pressrahmen und einen Verstellrahmen einer Formhälfte eines Werkzeuges von der Vorderseite mit Formrahmen und Formboden in perspektivischer Ansicht,
- Figur 2: einen Pressrahmen und einen Verstellrahmen einer Formhälfte eines Werkzeuges von der Vorderseite ohne Formrahmen und ohne Formboden in perspektivischer Ansicht,
- Figur 3: die Formhälfte aus Figur 1 und 2 von der Rückseite in perspektivischer Ansicht,
- Figur 4: eine zu der Formhälfte aus Figur 1 bis 3 komplementäre Formhälfte eines Werkzeugs von der Rückseite in perspektivischer Ansicht,
- Figur 5: die Formhälfte aus Figur 4 von der Vorderseite in perspektivischer Ansicht, und

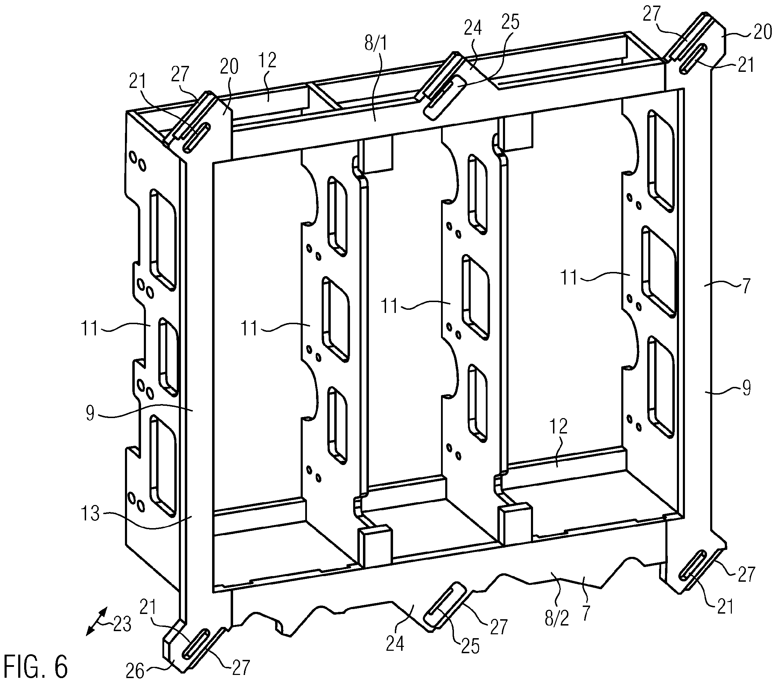

- Figur 6: den Verstellrahmen aus Figur 1 bis 3 in perspektivischer Ansicht.

Die Erfindung wird nachfolgend anhand eines Ausführungsbeispiels eines Werkzeuges zur Herstellung von geschäumten Dämmplatten, insbesondere von Fassadendämmplatten zur Gebäudeisolierung, erläutert, welche aus Schaumstoffpartikel durch Erhitzen mittels Dampf zu den Dämmplatten verschweißt werden.

Ein solches Werkzeug weist zwei Formhälften 1 auf, welche jeweils einen Formrahmen 2 und einen Formboden 3 umfassen. Mit dem Formrahmen 2 und dem Formboden 3 begrenzt eine jede Formhälfte 1 einen plattenförmigen bzw. quaderförmigen Hohlraum. Im Betrieb werden die beiden Formhälften 1 mit ihren offenen Seiten zusammengesetzt, so dass die beiden Hohlräume ein Formnest bilden, das an allen Seiten geschlossen ist und einen Hohlraum begrenzt, der in etwa einer herzustellenden Dämmplatte entspricht.

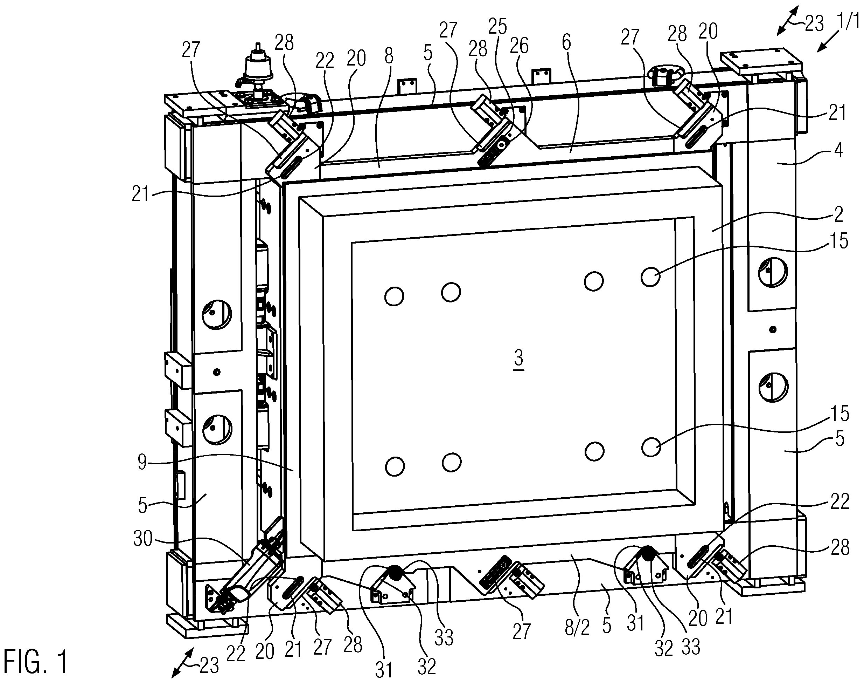

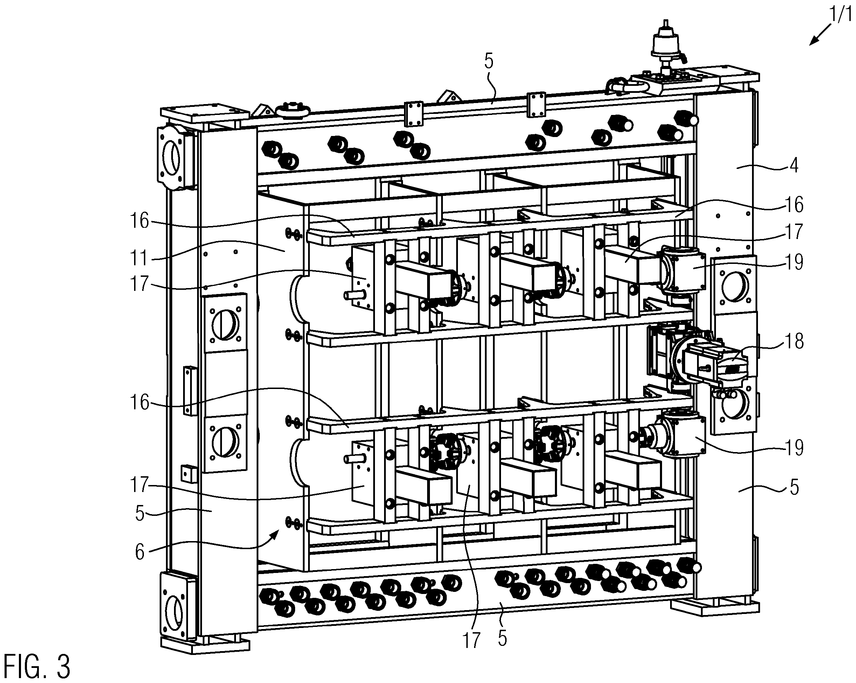

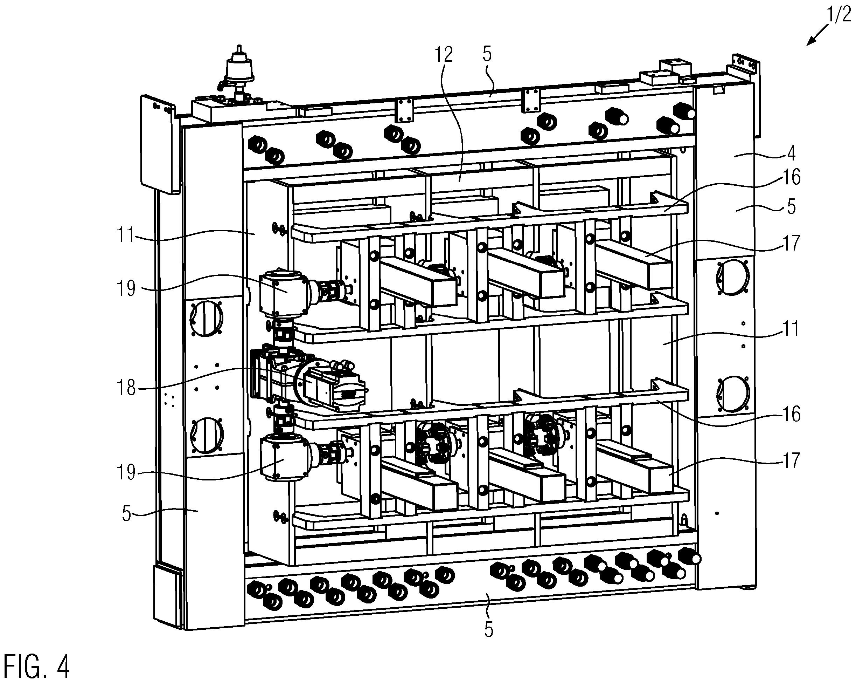

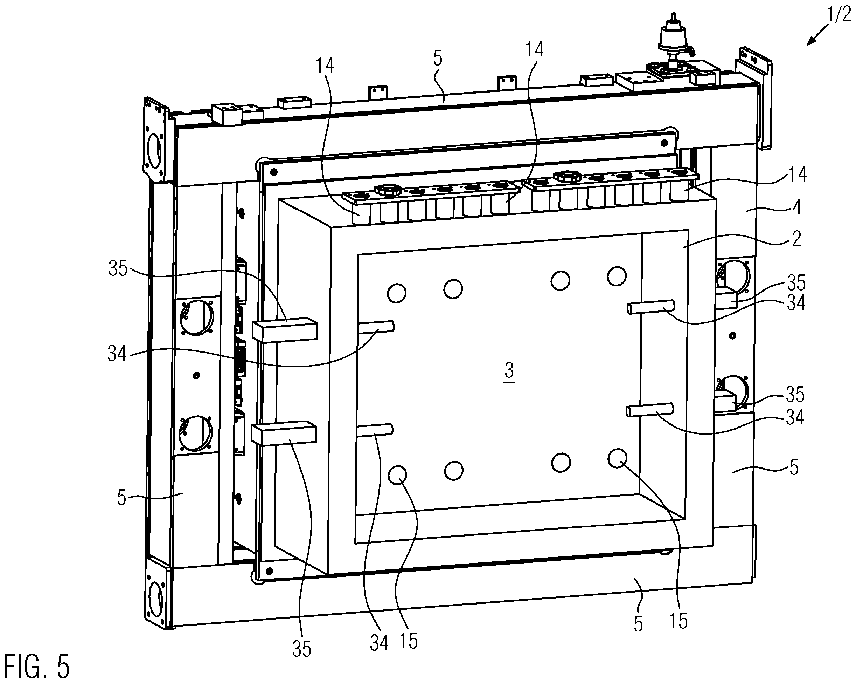

Die Formhälften 1 sind im Betrieb in einer Presse (nicht dargestellt) angeordnet, mit welcher die Formhälften 1 zur Ausbildung des Formnestes zusammengedrückt werden oder zum Entformen eines hergestellten Partikelschaumstoffteils auseinander gefahren werden. Eine der beiden Formhälften 1/1 (Figur 1 - 3) ist ortsfest in der Presse und die andere Formhälfte 1/2 (Figur 4, 5) ist beweglich in der Presse gehalten. Die Seite der Presse, die nicht beweglich ist wird als Festseite und die bewegliche Seite als Fahrseite bezeichnet.

Im Folgenden wird bzgl. einer jeden Formhälfte 1 als "vorne" bzw. als "Vorderseite" die zum Formnest weisende Seite der jeweiligen Formhälfte und als "hinten" bzw. als "Rückseite" die weg vom Formnest weisende Seite der jeweiligen Formhälfte bezeichnet.

Die Formhälften 1 weisen jeweils einen Pressrahmen 4 auf, welcher mit der Presse verbindbar ist. Der Pressrahmen ist ein rechteckiger Rahmen, welcher aus vier Rahmenteilen 5 zusammengesetzt ist. Ein jedes Rahmenteil 5 bildet ein im Querschnitt quadratisches Rohr und ist aus dickem Stahl ausgebildet, so dass der Pressrahmen 4 die Kräfte einer Presse gleichmäßig über den Umfang der jeweiligen Formhälfte 1 verteilen kann.

An zumindest einer der beiden Formhälften 1 ist am Pressrahmen 4 ein Verstellrahmen 6 angeordnet. Im vorliegenden Ausführungsbeispiel ist der die ortsfest in der Presse angeordnete Formhälfte 1/1 mit dem Verstellrahmen 6 versehen. Der Verstellrahmen 6 kann rahmenförmig ausgebildet sein und einen der Formrahmen 2 und einen der Formböden 3 halten. Im vorliegenden Ausführungsbeispiel ist der Verstellrahmen 6 mit einem umlaufenden Rahmenelement 7 mit zwei Längsträgern 8 und zwei kürzeren Querträgern 9 ausgebildet. Die Längsträger 8 und Querträger 9 sind jeweils aus einer streifeförmigen Stahlleiste ausgebildet. Zwischen den Längsträgern 8 erstrecken sich Zwischenträger 10, welche parallel zu den Querträgern 9 verlaufen und wie diese aus streifenförmigen Stahlleisten ausgebildet sind. An den Querträgern 9 und den Zwischenträgern 10 sind jeweils senkrecht stehende Tragplatten 11 angeordnet. Die Tragplatten 11 sind auf der Rückseite der Querträger 9 und Zwischenträger 10 senkrecht stehend zu den Trägern 9, 10 angeordnet. An den von den Quer- und Zwischenträgern 9, 10 entfernten Rändern der Tragplatten 11 sind streifenförmige Versteifungsstreben 12 angeordnet, welche parallel zu den Längsträgern 8 verlaufen. Die Längsträger 9, Querträger 10, Tragplatten 11 und Versteifungsstreben 12 sind verschweißt und bilden somit einen einteiliges Grundgerüst des Verstellrahmens 6.

Die streifenförmigen Längsträger 8, Querträger 9 und Zwischenträger 10 sind in einer gemeinsamen Ebene angeordnet und weisen mit ihren Vorderseiten zum jeweiligen Formboden 3 der Formhälften 1. Das aus den Längsträgern 8 und Querträgern 9 ausgebildete Rahmenelement 7 ist somit plattenförmig und ein in der Draufsicht rechteckige.

Mehrere Längsstreben 16 sind rückseitig an den Tragplatten 11befestigt und erstrecken sich im Bereich zwischen den Querträgern 9 und parallel zu den Längsträgern 8. An diesen Längsstreben 16 sind mehrere Hubstempel 17 befestigt, welche einen Hubmechanismus zum Bewegen des jeweiligen Hubstempels in einer Richtung senkrecht zum entsprechenden Formboden 3 ausbilden. Die nach vorne weisenden Enden der Hubstempel 17 sind jeweils am Formboden 3 der Formhälfte 1 befestigt. Es ist ein Antriebsmotor 18 mittels zweier Getriebe 19 mit den Hubstempeln 17 verbunden, so dass die Hubstempel 17 synchron aus- oder eingefahren werden.

Im vorliegenden Ausführungsbeispiel sind an den Formhälften 1 jeweils zwei Getriebe 19 vorgesehen.

Je nach Größe der Formhälfte und Anordnung der Hubstempel 17 kann auch lediglich nur ein Getriebe oder es können mehrere Getriebe vorgesehen sein. Die einzelnen Hubstempel 17 weisen einen Spindelantrieb auf, mit welchem die Drehbewegung des Antriebsmotors 18 in eine Linearbewegung des jeweiligen Hubstempels 17 umgesetzt wird. Der Spindelantrieb weist vorzugsweise eine Kugelumlaufspindel auf, um den jeweiligen Boden 3 schnell zu verstellen.

Die Hubstempel 17 bilden zusammen mit dem Antriebsmotor 18 und den Getrieben 19 eine Tiefeneinstelleinrichtung der jeweiligen Formhälften 1, mit welcher die Position des jeweiligen Formbodens 3 bezüglich des jeweiligen Formrahmens 2 und somit die Tiefe des durch die Formhälfte 1 begrenzten Hohlraumes einstellbar ist.

Die Tiefeneinstelleinrichtungen können auch jeweils mit zwei oder mehreren Antriebsmotoren, welche die Hubstempel oder Gruppen von Hubstempeln unabhängig voneinander antreiben, ausgebildet sein, so dass der jeweilige Formboden 3 im Formrahmen 2 etwas gekippt werden kann.

Die Formböden 3 sind gegenüber den Formrahmen mit einer umlaufenden aufblasbaren Dichtung abgedichtet. Zum Bewegen der Formböden wird die Dichtung mit Vakuum geleert, so dass der jeweilige Formboden 3 frei beweglich ist. Die Tiefeneinstelleinrichtung ist vorzugsweise derart ausgebildet, dass die Formböden nach vorne aus den Formrahmen 2 herausgefahren werden können, so dass die umlaufenden Dichtungen einfach ausgetauscht werden können.

An dem Formrahmen 2 der ortsfesten Formhälfte 1/2 sind Fülleranschlüsse 14 angeordnet. An diesen Fülleranschlüssen 14 sind Leitungen (nicht dargestellt) zum Zuführen und Füllen des Formnestes mit Schaumstoffpartikeln angeschlossen (Fig. 5). Die Fülleranschlüsse 14 sind möglichst weit vorne an dem Formrahmen 2 angeordnet, damit sie nicht vom jeweiligen Formboden 3 abgedeckt werden, wenn sich dieser in einer vorderen Stellung im Formrahmen 2 befindet.

An den Formböden 3 der beiden Formhälften 1 sind zusätzliche Fülleranschlüsse 15 vorgesehen (Fig. 1 und 5).

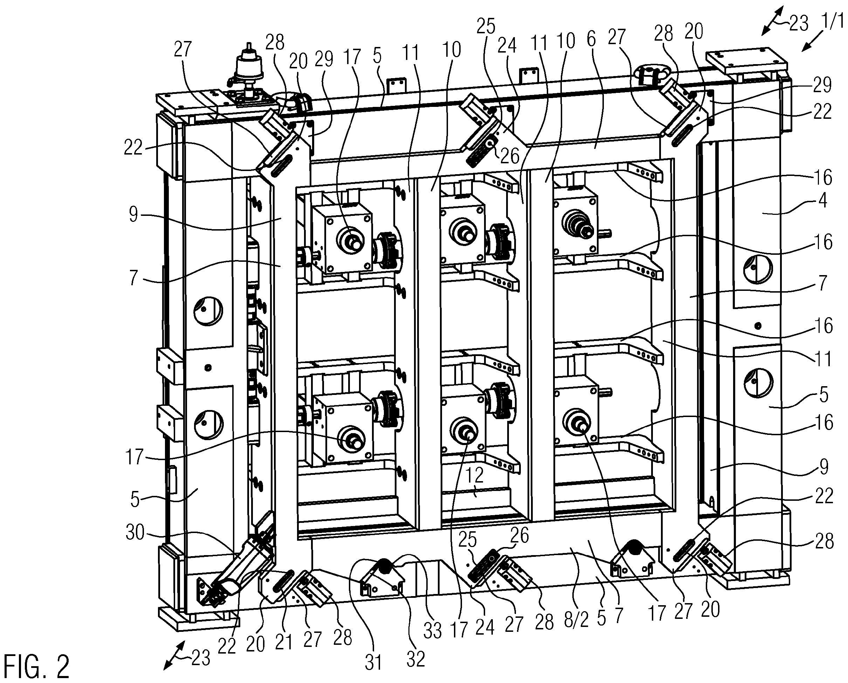

An den Eckbereichen des Verstellrahmens 6 weist das Rahmenelement 7 jeweils einen nach außen vorstehenden Vorsprung 20 auf, in dem ein Führungselement 21 in Form eines Langloches ausgebildet ist (Figur 1 und 2). All diese Führungselemente 21 sind in die gleiche Richtung um 45° gegenüber der Längsrichtung der Längsträger 8 bzw. der Querträger 9 geneigt. Die Führungselemente 21 sind somit alle zueinander parallel ausgebildet. Diese Richtung wird im Folgenden als Diagonalrichtung 23 bezeichnet, auch wenn der Begriff der Diagonale bei einem solchen nicht-quadratischen Rechteck für eine um 45° gegenüber einer Längskante geneigten Richtung mathematisch nicht korrekt ist. In die Führungselemente 21 greifen jeweils Führungszapfen 22 ein, welche am Pressrahmen 4 befestigt sind, so dass der Verstellrahmen 6 bezüglich des Pressrahmens 4 ausschließlich in Diagonalrichtung 23 ein Stück hin und her bewegt werden kann.

An den Längsmitten der Längsträger 8 sind nach außen vorstehende Vorsprünge 24 vorgesehen, an welchen in Diagonalrichtung 23 verlaufende Langlöcher ausgebildet sind, welche Sicherungslöcher 25 bilden. Durch die Sicherungslöcher erstrecken sich jeweils ein Sicherungsbolzen 26, welcher am Pressrahmen 4 befestigt ist und einen das entsprechende Sicherungsloch 25 überkragenden Kopf aufweist, so dass der Verstellrahmen 6 mit Spiel am Pressrahmen 4 gehalten wird und von diesem nicht ohne Lösen des Sicherungsbolzens 26 entfernt werden kann.

An allen Vorsprüngen 20, 24 ist eine Kante 27 ausgebildet, welche sich in Diagonalrichtung 23 erstreckt. Benachbart zu einer jeden Kante 27 ist eine hydraulische Klaue 28 angeordnet, welche an dem Pressrahmen 4 befestigt sind. Die Klauen 28 weisen jeweils einen Greifer auf, der hydraulisch ein- und ausgefahren werden kann, so dass er im ausgefahrenen Zustand auf den Vorsprüngen im Bereich der Kanten 27 aufliegt und den Verstellrahmen 6 gegen den Pressrahmen 4 drückt und so in die jeweilige relative Position bezüglich des Pressrahmens 4 fixiert.

Im Bereich der Vorsprünge 20 an den Ecken des Verstellrahmens 6 ist am Pressrahmen 4 jeweils eine Gleitplatte 29 angeordnet, die eine glatte Oberfläche aufweist. Der Verstellrahmen 6 weist an den Vorsprüngen 20 jeweils einen auf der Gleitplatte 29 abrollenden Kugelbolzen (nicht dargestellt) auf, so dass bei gelösten Klauen 28 der Verstellrahmen 6 mit geringer Reibung in Diagonalrichtung 23 bezüglich des Pressrahmens 4 bewegt werden kann.

Zum Bewegen des Verstellrahmens 6 relativ zum Pressrahmen 4 ist am Pressrahmen 4 ein Aktuator 30 befestigt, welcher am Verstellrahmen 6 angreift und eine Linearbewegung ausübt. Der Aktuator 30 ist in Diagonalrichtung 23 ausgerichtet. Er weist einen Antriebsmotor (nicht dargestellt) auf. Der Antriebsmotor ist mit der Steuereinrichtung verbunden. So kann die Steuereinrichtung eine Bewegung des Verstellrahmens 6 bezüglich des Pressrahmens 4 in Diagonalrichtung 23 steuern.

Die Formhälfte gemäß dem vorliegenden Ausführungsbeispiel ist für einen vertikalen Betrieb ausgebildet, d.h., dass der Pressrahmen 4 und der Verstellrahmen 6 vertikal stehen. Der Verstellrahmen 6 weist somit einen oberen Längsträger 8/1 und einen unteren Längsträger 8/2 auf. Am unteren Längsträger 8/2 sind zwei nach unten offene muldenförmige Ausnehmungen 31 ausgebildet. Die muldenförmigen Ausnehmungen 31 gehen an einer Seite in eine in Diagonalrichtung 23 verlaufende Begrenzungskante 32 über. Am Pressrahmen 4 ist im Bereich der muldenförmigen Ausnehmungen 31 jeweils eine Lastrolle 33 befestigt. In einer maximal abgesenkten Stellung des Verstellrahmens 6 liegt die Lastrolle 33 am Scheitelpunkt der muldenförmigen Ausnehmung 31 an. Diese maximal abgesenkte Stellung wird auch als Nullstellung bezeichnet. Wird der Verstellrahmen 6 aus dieser Nullstellung mittels des Aktuators 30 bewegt, dann gleitet der Verstellrahmen 6 mit seinen Begrenzungskanten 32 an den jeweiligen Lastrollen 33 entlang. Die Lastrollen 33 bilden somit ein Lastlager für den Verstellrahmen 6. Bei nicht betätigtem Aktuator 30 tragen die Lastrollen 33 im Wesentlichen das gesamte Gewicht des Verstellrahmens 6 und der daran befestigten Komponenten.

Am Formrahmen 2 der ortsfesten Formhälfte 1/2 sind Fixierstifte 34 vorgesehen, welche am Formrahmen 2 radial nach innen vorstehen. Die Fixierstifte 34 sind mittels jeweils einem Linearaktuators 35 einziehbar, so dass die Fixierstifte mit ihrem freien, radial innen liegendem Ende bündig mit der Oberfläche des Formrahmens 2 abschließen. Die Fixierstifte sind am vorderen Rand des Formrahmens 2 angeordnet und befinden sich in vertikaler Flucht unterhalb der Fülleranschlüsse 14. Der Linearaktuator kann als Pneumatikzylinder ausgebildet sein.
Nachfolgend wird die Herstellung einer Dämmplatte mit dem oben beschriebenen Werkzeug erläutert.

Die Formhälften 1 befinden sich zunächst im auseinandergefahrenen Zustand. Der Verstellrahmen 6 wird mittels des Aktuators 30 in die vorbestimmte Position bewegt. Meistens ist die vorbestimmte Position des Verstellrahmens derart, dass der Formrahmen 2 der beweglichen Formhälfte 1/1 etwas gegenüber dem Formrahmen 2 der ortsfesten Formhälfte 1/2 versetzt ist, um eine Dämmplatte mit Stufenfalz auszubilden.

Befindet sich der Verstellrahmen 6 in der gewünschten Position, dann wird er mittels der Klauen 28 am Pressrahmen 4 fixiert.

Die Fixierstifte 34 befinden sich in der ausgefahrenen Stellung (Figur 5).

Die beiden Formhälften werden dann mittels der Presse zusammengedrückt, so dass die beiden Formhälften gemeinsam ein Formnest begrenzen.

Mit der Tiefeneinstelleinrichtung werden die Formböden 3 bezüglich der Formrahmen 2 so eingestellt, dass die Formhälften eine gewünschte Tiefe aufweisen.

Über die Füllanschlüsse 14, 15 werden dem Formnest Schaumstoffpartikel zugeführt. Das Formnest wird vollständig mit Schaumstoffpartikel gefüllt.

Die Schaumstoffpartikel werden in an sich bekannter Weise erhitzt, um miteinander zu verschmelzen. Das Verschmelzen der Schaumstoffpartikel wird auch als Verschweißen oder Sintern bezeichnet. Das Erhitzen der Schaumstoffpartikel wird üblicherweise durch Zuführung von Dampf ausgeführt. Hierzu sind in den Formböden 3 und/oder in den Formrahmen 2 entsprechende Dampfdüsen (nicht dargestellt) angeordnet.

Das Erhitzen der Schaumstoffpartikel kann auch mittels elektromagnetischer Wellen, insbesondere Radiowellen oder Mikrowellen, erfolgen. Radiowellen sind hierbei bevorzugt, da Mikrowellen aufgrund ihrer kurzen Wellenlänge oftmals zu ungleichmäßiger Erhitzung führen, was insbesondere bei der Herstellung von großen Dämmplatten nachteilig ist. Es ist auch möglich, die Schaumstoffpartikel durch eine kombinierte Zugabe von Dampf und Zuführung von elektromagnetischen Wellen zu erhitzen.

Die Schaumstoffpartikel werden so weit verschweißt, dass sie aneinander haften, aber noch nicht vollständig verschweißt sind.

Danach wird zumindest einer und vorzugsweise werden beide Formböden ein Stück zurückgefahren, wodurch sich zwischen dem im Formnest befindlichen Schaumstoffpartikelteil und den Formböden 3 ein Hohlraum bildet. Das bereits bestehende Partikelschaumstoffteil wird mittels der Fixierstifte 34 im Formnest ortsfest gehalten.

Dieser Hohlraum wird mit Schaumstoffpartikel gefüllt. Die Schaumstoffpartikel werden hierbei ausschließlich über die Fülleranschlüsse 15 in den Formböden 3 zugeführt, da die Fülleranschlüsse 14 durch das bereits bestehende Partikelschaumstoffteil versperrt sind.

Sind die Hohlräume zwischen dem bestehenden Schaumstoffpartikelteil und den Formböden 3 vollständig mit weiteren Schaumstoffpartikeln gefüllt, dann werden die Fixierstifte 34 mittels der Linearaktuatoren 35 vollständig eingezogen, so dass sie nicht mehr in das Formnest ragen.

Die Schaumstoffpartikel und das bestehende Partikelschaumstoffteil werden durch Zuführung von Wärme (durch Heißdampf oder elektromagnetischer Strahlung oder einer Kombination davon) verschweißt und miteinander verbunden. Hierbei dehnen sich die Schaumstoffpartikel derart aus, dass auch die durch die zurückgezogenen Fixierstifte 34 hinterlassenen Löcher vollständig geschlossen werden.

Das derart ausgebildete Schaumstoffpartikelteil wird gekühlt. Das Kühlen kann passiv erfolgen, indem keine weitere Wärme zugeführt wird. Es ist jedoch auch möglich, das Werkzeug aktiv zu kühlen, indem beispielsweise die Außenflächen des Werkzeuges mit Kühlluft überströmt werden. Durch das Kühlen härtet das Partikelschaumstoffteil, das eine Dämmplatte ist, aus.

Die beiden Formhälften 1 werden mittels der Presse auseinandergefahren, um die Dämmplatte zu entformen.

Mit diesem Verfahren kann somit eine Dämmplatte aus mehreren Schichten hergestellt werden, wobei die einzelnen Schichten aus einem unterschiedlichen Kunststoffmaterial bestehen können. Die mittlere Schicht ist vorzugsweise hinsichtlich der Dämmeigenschaften optimiert. Die eine oder beide äußeren Schichten sind vorzugsweise bezüglich der Weiterverarbeitung optimiert. Die Dämmplatten werden an Gebäuden angebracht und verputzt. Die äußere Schicht weist vorzugsweise eine Beschaffenheit auf, an welcher der Putz gut haftet. Wenn beide Seiten der Dämmplatte mit einer solchen Schicht versehen sind, können Verschnitte gewendet werden, so dass es einfacher ist, solche Verschnitte ordnungsgemäß einzusetzen.

Da der Verstellrahmen 6 stufenlos verschiebbar ist, kann der Stufenfalz entsprechend stufenlos frei eingestellt werden. Da beide Formhälften einen verstellbaren Formboden 3 aufweisen, ist die jeweilige Dicke vom Stufenfalz zu den beiden Seitenflächen individuell einstellbar.

Es können somit Dämmplatten hergestellt werden, deren Stufenfalz und deren Dicke und insbesondere deren Dickenabschnitte vom Stufenfalz zu den Seitenflächen frei einstellbar sind.

Mit diesem Werkzeug lassen sich auch Dämmplatten ohne Stufenfalz herstellen. Solche Dämmplatten können einerseits dadurch hergestellt werden, dass der Verstellrahmen 6 so eingestellt wird, dass die beiden Formrahmen 2 der beiden Formhälften 1 nicht zueinander versetzt sind. An den Stoßflächen der beiden Formrahmen 2 bildet sich hierdurch ein Grat am fertigen Partikelschaumstoffteil.

Dieser Grat kann vermieden werden, wenn einer der Formböden 3 derart weit vorgefahren ist, dass er ein Stück an seinem Formrahmen 2 vorsteht. Dieser Formboden 3 bildet dann einen Stempel, der in den Formrahmen 2 der anderen Formhälfte 1 ragt. Hierdurch wird das Formnest alleine durch einen einzigen der beiden Formrahmen 2 und den beiden Formböden 3 begrenzt, so dass sich am fertigen Partikelschaumstoffteil kein umlaufender Grat bildet.

Die bewegliche Formhälfte 1/2 ist deshalb mit einer maximalen Tiefe von 400 mm ausgebildet. Dies bedeutet, dass der stufenfalzfreie und gratfreie Dämmplatten mit einer Dicke bis zu 400 mm herstellbar sind. Die maximale Tiefe der ortsfesten Formhälfte 1/1 beträgt 200 mm.

Der Verstellrahmen ist über eine Strecke von 50 mm frei einstellbar.

Vorzugsweise beträgt die maximale Tiefe der beiden Formhälften zumindest 100 mm und insbesondere zumindest 200 mm. Vorzugsweise ist die maximale Tiefe einer Formhälfte größer als der anderen Formhälfte, um diese Formhälfte zum Herstellen gratfreier und stufenfalzfreier Dämmplatten verwenden zu können. Diese tiefere Formhälfte ist vorzugsweise die Formhälfte, die nicht den Verstellrahmen 6 aufweist, da je tiefer die Formhälfte ist, desto schwerer diese Formhälfte ist. Das entsprechende Gewicht muss vom Verstellrahmen getragen und vom Aktuator 30 bewegt werden.

Weiterhin ist eine zentrale Steuereinrichtung vorgesehen, welche selbsttätig den Verstellrahmen 6 in die richtige Position sowie die Formböden 3 bezüglich der Formrahmen 2 einstellt. Mit einem solchen Werkzeug ist es somit möglich, unterschiedlichste Dämmplatten in beliebiger Reihenfolge herzustellen, ohne dass hierzu ein manuelles Justieren notwendig ist.

Bei obigem Ausführungsbeispiel weisen beide Formhälften 1 jeweils eine Tiefeneinstelleinrichtung auf, mit welcher der jeweilige Formboden 3 bezüglich des entsprechenden Formrahmens 2 bewegt werden kann. Im Rahmen der vorliegenden Erfindung ist es auch möglich, dass nur eine oder keine der Formhälften mit einer Tiefeneinstelleinrichtung ausgebildet ist. Weist die Formhälfte keine Tiefeneinstelleinrichtung auf, dann sind der Formrahmen und der Formboden der jeweiligen Formhälfte vorzugsweise einteilig ausgebildet. Der Formboden kann dann z. B. mit dem Formrahmen umlaufend verschweißt sein.

Im Rahmen der Erfindung ist es auch möglich, dass beide Formhälften 1 in einer Ebene parallel zu den Formböden 3 verstellbar sind, wobei die Verstellrichtungen der beiden Formhälften vorzugsweise zueinander orthogonal bzw. senkrecht stehen.

**Bezugszeichenliste**

| | | | |
|---|---|---|---|
| 1 | Formhälfte | 19 | Getriebe |
| 2 | Formrahmen | 20 | Vorsprung |
| 3 | Formboden | 21 | Führungselement |
| 4 | Pressrahmen | 22 | Führungszapfen |
| 5 | Rahmenteil | 23 | Diagonalrichtung |
| 6 | Verstellrahmen | 24 | Vorsprung |
| 7 | Rahmenelement | 25 | Sicherungsloch |
| 8 | Längsträger | 26 | Sicherungsbolzen |
| 9 | Querträger | 27 | Kante |
| 10 | Zwischenträger | 28 | Klaue |
| 11 | Tragplatte | 29 | Gleitplatte |
| 12 | Versteifungsstrebe | 30 | Aktuator |
| 14 | Fülleranschluss | 31 | muldenförmige Ausnehmung |
| 15 | Fülleranschluss | 32 | Begrenzungskante |
| 16 | Längsstrebe | 33 | Lastrolle |
| 17 | Hubstempel | 34 | Fixierstift |
| 18 | Antriebsmotor | 35 | Linearaktuator |

## Patentansprüche

1. Werkzeug zur Herstellung von geschäumten Dämmplatten, insbesondere von Fassadendämmplatten zur Gebäudeisolierung, wobei die Dämmplatten zwei einander gegenüberliegende Seitenflächen und umlaufende Stirnflächen aufweisen, und das Werkzeug zwei Formhälften (1) mit jeweils einem Formrahmen (2) und einem Formboden (3) aufweist, so dass die beiden Formhälften gemeinsam ein Formnest begrenzen, das in etwa einer herzustellenden Dämmplatte entspricht, wobei die Formrahmen die Stirnflächen einer herzustellenden Dämmplatte und die Formböden die Seitenflächen einer herzustellenden Dämmplatte definieren,
wobei eine Einstelleinrichtung zum Einstellen der Position der beiden Formhälften (1) in einer Ebene parallel zu den Formböden (3) vorgesehen ist.

2. Werkzeug nach Anspruch 1,
**dadurch gekennzeichnet,**
**dass** die Einstelleinrichtung zum stufenlosen Einstellen der Position der beiden Formhälften zueinander ausgebildet ist.

3. Werkzeug nach Anspruch 1 oder 2,
**dadurch gekennzeichnet,**
**dass** die Formrahmen (2) die Form eines Rechtecks aufweisen und die Einstelleinrichtung zum Einstellen der Position der beiden Formhälften (1) in eine gegenüber einer Kante des Rechtecks geneigten Richtung ausgebildet sind.

4. Werkzeug nach Anspruch einem der Ansprüche 1 bis 3,
**dadurch gekennzeichnet,**
**dass** die Formhälften (1) jeweils einen Pressrahmen (4) aufweisen, der mit einer Presse verbindbar ist, an einem der beiden Pressrahmen (1) ein Verstellrahmen (6) angeordnet ist, an dem einer der Formrahmen (2) und einer der Formböden (3) befestigt sind, und
der Verstellrahmen (6) am Pressrahmen (4) verschieblich gelagert ist und ein Aktuator (30) zum stufenlosen Verschieben des Verstellrahmens (6) gegenüber dem Pressrahmen (4) vorgesehen ist.

5. Werkzeug nach Anspruch 4,
**dadurch gekennzeichnet,**
**dass** der Aktuator (30) eine elektrische, hydraulische oder pneumatische Antriebseinrichtung aufweist.

6. Werkzeug nach Anspruch 4 oder 5,
**dadurch gekennzeichnet,**
**dass** am Pressrahmen (4) mehrere Klauen (28) zum Fixieren des Verstellrahmens (6) vorgesehen sind, welche vorzugsweise hydraulisch, pneumatisch oder elektrisch betätigbar sind.

7. Werkzeug nach einem der Ansprüche 4 bis 6,
**dadurch gekennzeichnet,**
**dass** zwischen dem Verstellrahmen (6) und dem korrespondierenden Pressrahmen (4) ein Gleitlager (29) ausgebildet ist.

8. Werkzeug nach Anspruch 7,
**dadurch gekennzeichnet,**
**dass** das Gleitlager (29) zum Lagern zweier Kontaktflächen des Verstellrahmens (6) und des Pressrahmens (4) ausgebildet sind, welche in etwa parallel zu den Formböden (3) angeordnet sind, und eine Gleitplatte (29) und/oder ein Kugellager aufweisen.

9. Werkzeug nach einem der Ansprüche 4 bis 8,
**dadurch gekennzeichnet,**
**dass** am Pressrahmen (4) zumindest ein Lastlager (33) vorgesehen ist, welches bei vertikaler Anordnung an einer unteren Stirnfläche des Verstellrahmens (6) anliegt, wobei der Verstellrahmen (6) angrenzend zu dem Lastlager (33) eine nach unten offene Ausnehmung (31) aufweist, so dass das Lastlager in einer Nullstellung an einem Scheitelpunkt dieser Ausnehmung (31) anliegt.

10. Werkzeug nach einem der Ansprüche 1 bis 9,
**dadurch gekennzeichnet,**
**dass** eine Tiefeneinstelleinrichtung vorgesehen ist, mit welcher der Formboden (3) einer der Formhälften (1) bzgl. des entsprechenden Formrahmens (2) in eine zur Ebene des Formbodens (3) etwa senkrecht stehenden Richtung einstellbar ist.

11. Werkzeug nach einem der Ansprüche 1 bis 10,
**dadurch gekennzeichnet,**
**dass** die Formböden (3) eine oder mehrere Dampfzuführungen aufweisen.

12. Werkzeug nach einem der Ansprüche 1 bis 11,
**dadurch gekennzeichnet,**
**dass** zumindest einer der Formrahmen (2) und/oder zumindest einer der Formböden (3) einen Fülleranschluss (14, 15) zum Zuführen von Schaumstoffpartikel aufweist, und/oderdass zumindest ein Fixierstift (34) vorgesehen ist, welcher mittels eines Linearaktuators (35) in das Formnest vorstehend ausgefahren und aus dem Formnest zurück gezogen werden kann.

13. Vorrichtung zur Herstellung von geschäumten Dämmplatten, insbesondere von Fassadendämmplatten zur Gebäudeisolierung, mit einem Werkzeug nach einem der Ansprüche 1 bis 12, und einer Presse, mit welcher die beiden Formhälften zusammengedrückt werden können.

14. Vorrichtung nach Anspruch 13,
**dadurch gekennzeichnet,**
**dass** eine Heizeinrichtung zum Erhitzen des Formnestes vorgesehen ist, wobei die Heizeinrichtung einen Dampfgenerator zum Erzeugen von Dampf und/oder einen Generator zum Erzeugen von elektromagnetischen Wellen aufweist.

15. Verfahren zur Herstellen von geschäumten Dämmplatten, insbesondere von Fassadendämmplatten zur Gebäudeisolierung, wobei die Dämmplatten zwei einander gegenüberliegende Seitenflächen und umlaufende Stirnflächen aufweisen, und das Werkzeug zwei Formhälften (1) mit jeweils einem Formrahmen (2) und einem Formboden (3) aufweist, so dass die beiden Formhälften gemeinsam ein Formnest begrenzen, das in etwa einer herzustellenden Dämmplatte entspricht, wobei die Formrahmen die Stirnflächen einer herzustellenden Dämmplatte und die Formböden die Seitenflächen einer herzustellenden Dämmplatte definieren,
wobei die Position der beiden Formhälften (1) in einer Ebene parallel zu den Formböden (3) eingestellt wird, und
insbesondere eine Vorrichtung nach einem der Ansprüche 1 bis 14 verwendet wird.
